# EUROPEAN PATENT SPECIFICATION

(11) **EP 3 280 628 B1**
(45) Date of publication and mention of the grant of the patent: **26.10.2022**
(21) Application number: 16776179.0
(22) Date of filing: 04.04.2016
(51) Int. Cl.: B61G 5/02, B61D 13/00, B61G 7/12, B61D 3/10

(54) **RAIL VEHICLE**
SCHIENENFAHRZEUG
VÉHICULE SUR RAILS

(30) Priority: 07.04.2015 FI 20155246
(43) Date of publication of application: 14.02.2018
(73) Proprietor: Helsingin kaupungin liikenneliikelaitos, 00099 Helsingin kaupunki (FI)
(72) Inventor: HEIKKILÄ, Ollipekka, 00099 Helsingin kaupunki (FI)
(74) Representative: Kolster Oy Ab
(86) International application number: PCT/FI2016/050207
(87) International publication number: WO 2016/162597

(56) References cited:
- CN-U- 201 626 424
- DE-A1- 10 343 536
- DE-U1-202004 020 784
- DE-U1-202009 000 688
- JP-A- 2005 289 297
- JP-A- 2005 335 445
- JP-A- 2007 008 446
- JP-A- 2007 253 679
- US-A1- 2011 315 040
- US-A1- 2014 224 756

## Description

### Background of the invention

The invention relates to a rail vehicle, a tram in particular, which comprises supporting car units provided with bogies, and at least one supported bogieless car unit being supported between two supporting car units by means of lower supports between the car units, the lower supports comprising a pivot system to allow turning between the car units in all directions; and being supported by at least one upper support between the supported car unit and the supporting car unit, the upper support guiding a vertical position of the supported car unit with respect to the supporting car unit.

The above-described structure is used in many car types, for instance in cars provided with multiple articulations. Currently, the pivot system of the lower support employs ball bearings, which allows a swivel formed in this manner in the lower support to move in every direction. The upper supports may be provided with mechanical solutions of several different types, but they all have the same purpose, that is to keep the supported car unit at a correct vertical angle with respect to the supporting car units. Other previous solutions for car unit coupling systems are also known from JP2005289297A and from JP2007008446A, for instance.

In connection with rail vehicles, problems arise concerning inter alia how easy they are to get on and off at stops.

In principle, a supported bogieless car unit provides wider possibilities for developing the rail vehicle in respect of this car unit when compared with a car unit supported on the rails by means of a bogie, but these possibilities have not been exploited.

### Summary of the invention

An object of the invention is to utilize the support of the supported car in a new manner and thus improve the rail vehicle to make it as easy and convenient as possible to use for all passengers also when getting on and off. This object is achieved by the rail vehicle according to the invention, which is characterized by what is stated in the characterizing part of the independent claims.

The inclination according to the invention is meant to be used mainly at stops only, when the rail vehicle is immobile, and expressly for making the supported car unit incline sufficiently through inclination of the supported car unit, i.e. transverse movement of the upper support, in order to diminish a height difference between a raised stop platform and a car unit floor.

The inclination may be implemented only on one side of the rail vehicle, but if there are stops on both sides of the track of the rail vehicle, it may in practice be most sensible that the inclination is implemented on both sides of the central longitudinal vertical plane of the rail vehicle. Inclination in one or both direction(s) may be provided by a plurality of structures to be described below but, at its simplest, for instance an inclination device arranged in one reaction bar provided between the supported car unit and the supporting car unit and serving as the upper support will suffice. The inclination device may also be connected with a modification of a so-called Watt's mechanism, which will also be described below.

The invention is simply based on connecting for instance to a reaction bar or the like typically used as the upper support an inclination device according to the invention, preferably performing a linear movement, wherein the control of the inclination device is kept locked during running such that the vertical position of the supported car unit substantially follows the vertical position of the supporting car units, as in the prior art, but wherein it is possible at stops to level the raised stop platform and the car unit floor, making it considerably easier to unobstructedly use electric wheelchairs in particular.

Hydraulic cylinders, electric linear motion bars or pneumatic cylinders may be used as the inclination device.

### List of figures

The invention is now described in closer detail by means of preferred embodiments and with reference to the accompanying drawings, in which:
Figure 1 is a side view showing a rail vehicle according to the invention;
Figure 2 is a top view showing support of a supported car of the rail vehicle shown in Figure 1;
Figure 3 shows the support shown in Figure 2 in a longitudinal direction of the rail vehicle;
Figure 4 is a top view showing an alternative implementation of the support of a supported car of the rail vehicle shown in Figure 1;
Figure 5 shows the support seen in Figure 2 in the longitudinal direction of the rail vehicle.

### Detailed description of the invention

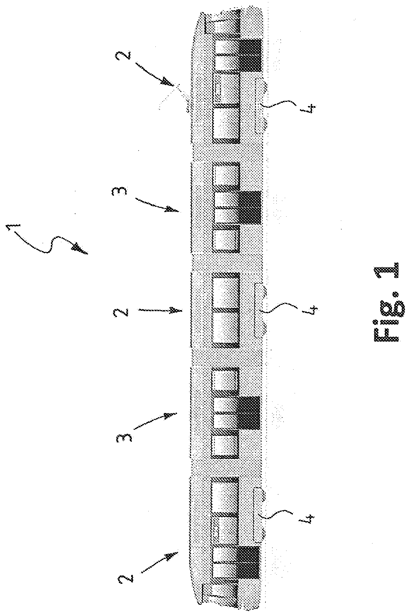

Figure 1 shows a rail vehicle 1, a tram in particular, which comprises supporting car units 2 provided with bogies 4, and supported bogieless car units 3 being supported between two supporting car units 2.

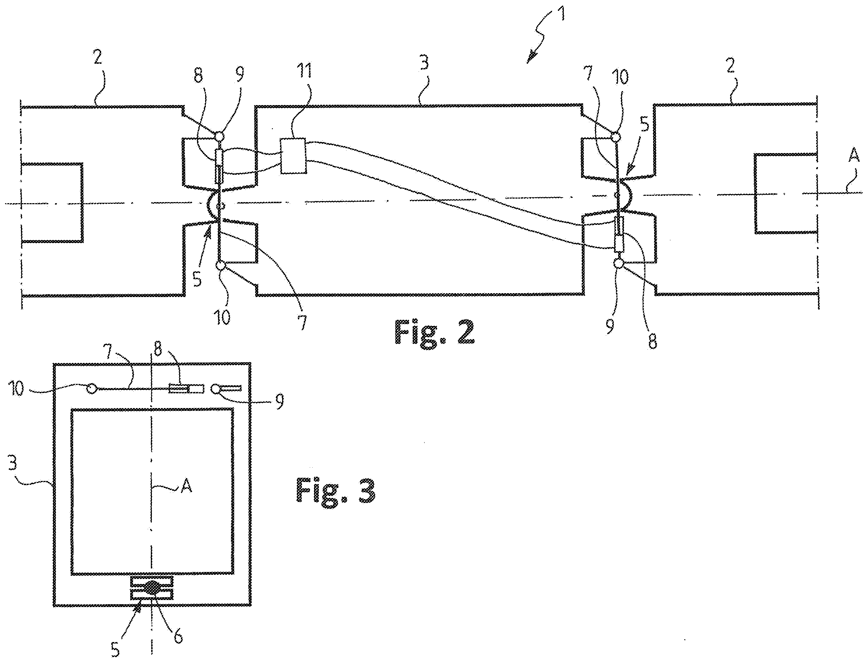

According to Figures 2 and 3, this support is implemented by lower supports 5 between the car units 2 and 3, the lower supports 5 comprising a pivot system 6 responsible for allowing turning between the car units 2, 3 in all directions, this support at the same time implementing the actual engagement of the car units 2 and 3 to support and hold them together. The supported car unit 3 is further supported, in this example at its both ends, by means of upper supports 7 provided between the supported car unit 3 and the supporting car unit 2 and guiding the vertical position of the supported car unit 3 with respect to the supporting car units 2, typically keeping the supported car units 3 substantially at the same angle with respect to the supporting car units 2, i.e. a plane or line formed by the side walls of the rail vehicle 1 "uniform".

Each upper support 7 further comprises an inclination device 8 according to the invention for deviating the supported car unit 3 from a vertical angle of the supporting car units 2, i.e. from the aforementioned "uniform" plane or line formed by the side walls of the rail vehicle 1 and produced by the above-described support system while the rail vehicle 1 is running.

This inclination is only arranged for inclining the supported car units 3 at stops only, when the rail vehicle 1 is immobile for passengers to get on and off. When the rail vehicle 1 is running, the inclination devices 8 are not used and they have no purpose affecting the running properties of the rail vehicle 1.

More specifically described, each upper support comprises a reaction bar 7 which is substantially horizontal and substantially transverse to the longitudinal direction of the cars 2, 3 and in which the inclination device 8 is arranged for elongating or shortening the reaction bar 7 and thus for causing inclination of the supported car unit 3. These reaction bars 7 that, in this example, are arranged at both ends of the car 3, are provided with support points 9 at opposite ends of the car unit 3 supported on the supporting car units 2 and located on opposite sides of a central longitudinal vertical plane A of the rail vehicle 1 which at the same time passes via the pivot systems 6 of the lower supports 5. Corresponding support points of the reaction bars 7 on the supported car unit 2 are designated with reference number 10. Between the support points 9, 10 and the reaction bars 7 are provided pivots (not shown) to allow the reaction bars 7 to turn when the rail vehicle 1 is running and while they are being used at stops. In this example, hydraulic cylinders driven by a hydraulic unit 11 are used as the inclination devices 8.

In the above-described example, the inclination of the supported car unit 3 is implemented on both sides of the central longitudinal vertical plane A of the rail vehicle 1, and the inclination devices 8 are controlled in accordance with the direction of inclination. When implementing the inclination, one inclination device 8 elongates while the other inclination device 8 shortens, i.e. a hydraulic fluid is supplied onto the opposite sides of the hydraulic cylinders, in which case the inclination of the car unit 3 takes place onto the side on which the inclination device 8 seen in Figure 2 shortens. If only one of the inclination devices 8 is used, the supporting car unit 2 located on the "non-active" side tends to turn around its longitudinal axis.

The structure shown in Figures 2 and 3 may also be modified to provide a simpler implementation by simply completely omitting one upper support 7, in other words by only using it at one end of the supported car unit 7, the coupling of the other end of the supported car unit 3 on the supporting car unit 2 resting on the lower support 5 only. In such a case, the inclination can be implemented on both sides of the central longitudinal vertical plane A of the rail vehicle 1, as long as the travel path of the inclination device 8, i.e. the hydraulic cylinder, is sufficiently long. If inclination is needed on one side only, a half shorter travel path of the inclination device 8 will suffice. In this solution, while the rail vehicle 1 is running, only one supporting car unit, i.e. the supporting car unit 2 on the side of the upper support 7, determines the position of the supported car unit 3, which is advantageous in longer rail vehicles 1 in relation to its longitudinal turning loads.

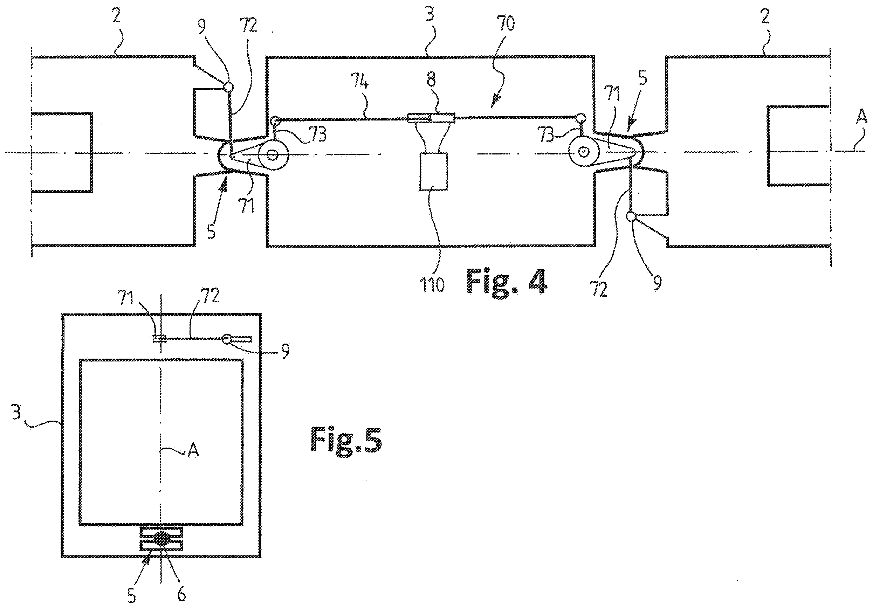

Figures 4 and 5 show an alternative upper support of bogieless car units 3. It consists of a leverage 70 comprising first levers 71 pivotably mounted at both ends of an upper part of the supported car 3, substantially at the central longitudinal vertical plane A of the rail vehicle 1 which at the same time passes via the pivot systems 6 of the lower supports 5, so as to turn around substantially vertical axles and facing towards the supporting cars 3; second levers 72 which are pivotably connected with ends of these first levers 71 pointing towards the supporting cars 3 and whose support points 9 on the side of opposite ends of the car unit 3 supported on the supporting car units 2 are located on opposite sides of said vertical plane A; and third levers 73 arranged fixedly on the first levers 71 such that they point towards a side of the rail vehicle 1, each towards the same side of the rail vehicle 1 (the levers 71 and 73 substantially at a right angle mutually); and a connecting rod 74 pivotably mounted at ends of the third levers 73; wherein the inclination device 8 is arranged in the connecting rod 74 in order to elongate or shorten it and thus to cause inclination of the supported car unit 3. Herein, too, a hydraulic cylinder driven by a hydraulic unit 110 is used as the inclination device 8. Depending on the side of the rail vehicle 1 on which the inclination is to be applied, the inclination device 8 is shortened or elongated, i.e. a hydraulic fluid is supplied on either side of the hydraulic cylinder. This leverage enables the inclination to be applied on each side of the rail vehicle. This arrangement is advantageous also while the rail vehicle 1 is running since it halves the angle value between the supporting car units 2 into the angle value of the vertical position of the supported car unit 3. Of course, this also enables a version which only extends or shortens the connecting bar 74, only allowing inclination in one direction.

In all above-described implementations, electric linear motion bars or pneumatic cylinders may also be selected as the inclination devices 8. Other solutions performing linear motion are also possible.

While the rail vehicle 1 is running, the use of the inclination devices 8 is locked, but at stops they are available for use by a driver through a push button provided in the driver's compartment. The driver further has to also possibly select the direction of inclination, depending on the side of the rail vehicle 1 on which the stop resides.

The above description of the invention is only intended to illustrate the basic idea of the invention. A person skilled in the art may thus vary its details within the scope of the attached claims.

## Claims

1. A rail vehicle (1), a tram in particular, which comprises supporting car units (2) provided with bogies (4), and at least one supported bogieless car unit (3) being
supported between two supporting car units (2) by means of lower supports (5) between the car units (2, 3), the lower supports (5) comprising a pivot system (6) to allow turning between the car units (2, 3) in all directions; and being
supported by at least one upper support (7) between the supported car unit (3) and the supporting car unit (2), the upper support (7) guiding a vertical position of the supported car unit (3) with respect to the supporting car unit (2),
**characterized in that** for passengers to get on and off at stops the upper support (7) comprises an inclination device (8) for deviating at least one supported car unit (3) from a vertical angle of the supporting car unit (2),
wherein the upper support comprises a reaction bar (7) which is substantially transverse to a longitudinal direction of the cars (2, 3) and on which the inclination device (8) is arranged for elongating or shortening the reaction bar (7) and thus for causing inclination of the supported car unit (3).

2. A rail vehicle as claimed in claim 1, **characterized in that** while the rail vehicle (1) is running, the use of the inclination devices (8) is locked, but at stops they are available for use by a driver through a push button provided in the driver's compartment.

3. A rail vehicle according to claim 1, **characterized in that** this inclination is only arranged for inclining the supported car units (3) at stops only, when the rail vehicle (1) is immobile for passengers to get on and off.

4. A rail vehicle according to any of the previous claims, **characterized in that** the reaction bars (7) are arranged at both ends of the supported car (3), their support points (9) on the supporting car units (2) at opposite ends of the supported car unit (3) being located on opposite sides of a central longitudinal vertical plane (A) of the rail vehicle (1) which at the same time passes via the pivot systems (6) of the lower supports (5).

5. A rail vehicle according to any of the previous claims , **charac**- **terized** in that the inclination device (8) is a hydraulic cylinder.

6. A rail vehicle according to any of the claims from 1 to 4, **characterized in that** the inclination device (8) is an electric linear motion bar.

7. A rail vehicle according to any of the claims from 1 to 4, **characterized in that** the inclination device (8) is a pneumatic cylinder.

8. A rail vehicle (1), a tram in particular, which comprises supporting car units (2) provided with bogies (4), and at least one supported bogieless car unit (3) being
supported between two supporting car units (2) by means of lower supports (5) between the car units (2, 3), the lower supports (5) comprising a pivot system (6) to allow turning between the car units (2, 3) in all directions; and being
supported by at least one upper support (70) between the supported car unit (3) and the supporting car unit (2), the upper support (70) guiding a vertical position of the supported car unit (3) with respect to the supporting car unit (2),
**characterized in that** for passengers to get on and off at stops the upper support (70) comprises an inclination device (8) for deviating at least one supported car unit (3) from a vertical angle of the supporting car unit (3),
wherein the upper support consists of a leverage (70) comprising first levers (71) pivotably mounted at both ends of the supported car (3), substantially at the central longitudinal vertical plane (A) of the rail vehicle (1) which at the same time passes via the pivot systems (6) of the lower supports (5), so as to turn around substantially vertical axles and facing towards the supporting cars (3); second levers (72) which are pivotably connected with ends of the first levers (71) pointing towards the supporting cars (3) and whose support points (9) at opposite ends of the supported car unit (3) supported on the supporting car units (2) are located on opposite sides of said vertical plane (A); third levers (73) arranged fixedly in the first levers (71) such that they point towards a side of the rail vehicle (1), each towards the same side of the rail vehicle (1); and a connecting rod (74) pivotably mounted at ends of the third levers (73); wherein the inclination device (8) is arranged in the connecting rod (74) in order to elongate or shorten it and thus to cause inclination of the supported car unit (3).

9. A rail vehicle according to claim 8, **characterized in that** the inclination device (8) is a hydraulic cylinder.

10. A rail vehicle according to claim 8, **characterized in that** the inclination device (8) is an electric linear motion bar.

11. A rail vehicle according to claim 8, **characterized in that** the inclination device (8) is a pneumatic cylinder.

## Patentansprüche

1. Schienenfahrzeug (1), insbesondere eine Straßenbahn, das Stützwaggoneinheiten (2), die mit Drehgestellen (4) ausgerüstet sind, und mindestens eine gestützte Waggoneinheit (3) ohne Drehgestell umfasst, die
mittels unteren Stützen (5) zwischen den Waggoneinheiten (2, 3) zwischen zwei Stützwaggoneinheiten (2) gestützt wird, wobei die unteren Stützen (5) ein Schwenksystem (6) umfassen, das ein Drehen zwischen den Waggoneinheiten (2, 3) in alle Richtungen erlaubt; und
durch mindestens eine obere Stütze (7) zwischen der gestützten Waggoneinheit (3) und der Stützwaggoneinheit (2) gestützt wird, wobei die obere Stütze (7) eine vertikale Position der gestützten Waggoneinheit (3) mit Bezug auf die Stützwaggoneinheit (2) führt,
**dadurch gekennzeichnet ist, dass** zum Ein- und Aussteigen von Passagieren an Haltestellen die obere Stütze (7) eine Neigungsvorrichtung (8) zum Versetzen mindestens einer gestützten Waggoneinheit (3) aus einem vertikalen Winkel der Stützwaggoneinheit (2) umfasst,
wobei die obere Stütze eine Reaktionsstange (7) umfasst, die im Wesentlichen quer zu einer Längsrichtung der Waggons (2, 3) verläuft und an der die Neigungsvorrichtung (8) zum Verlängern oder Verkürzen der Reaktionsstange (7) und somit zum Bewirken der Neigung der gestützten Waggoneinheit (3) angeordnet ist.

2. Schienenfahrzeug wie in Anspruch 1 beansprucht, **dadurch gekennzeichnet ist, dass** die Verwendung der Neigungsvorrichtungen (8) verriegelt ist, während das Schienenfahrzeug (1) fährt, an Haltestellen zur Verwendung durch einen Fahrer über eine Drucktaste, die in der Fahrerkabine bereitgestellt ist, aber verfügbar sind.

3. Schienenfahrzeug nach Anspruch 1, **dadurch gekennzeichnet, dass** diese Neigung nur zum Neigen der gestützten Waggoneinheiten (3) nur an Haltestellen angeordnet ist, wenn das Schienenfahrzeug (1) zum Ein- und Aussteigen der Passagiere steht.

4. Schienenfahrzeug nach einem der vorhergehenden Ansprüche, **dadurch gekennzeichnet, dass** die Reaktionsstangen (7) an beiden Enden des gestützten Waggons (3) angeordnet sind, wobei deren Stützpunkte (9) an den Stützwaggoneinheiten (2) an gegenüberliegenden Enden der gestützten Waggoneinheit (3) auf gegenüberliegenden Seiten einer zentralen vertikalen Längsebene (A) des Schienenfahrzeugs (1) positioniert sind, die gleichzeitig via die Schwenksysteme (6) der unteren Stützen (5) verläuft.

5. Schienenfahrzeug nach einem der vorhergehenden Ansprüche, **dadurch gekennzeichnet, dass** die Neigungsvorrichtung (8) ein Hydraulikzylinder ist.

6. Schienenfahrzeug nach einem der Ansprüche 1 bis 4, **dadurch gekennzeichnet, dass** die Neigungsvorrichtung (8) eine elektrische lineare Bewegungsstange ist.

7. Schienenfahrzeug nach einem der Ansprüche 1 bis 4, **dadurch gekennzeichnet, dass** die Neigungsvorrichtung (8) ein Pneumatikzylinder ist.

8. Schienenfahrzeug (1), insbesondere eine Straßenbahn, das Stützwaggoneinheiten (2), die mit Drehgestellen (4) ausgerüstet sind, und mindestens eine gestützte Waggoneinheit (3) ohne Drehgestell umfasst, die
mittels unteren Stützen (5) zwischen den Waggoneinheiten (2, 3) zwischen zwei Stützwaggoneinheiten (2) gestützt wird, wobei die unteren Stützen (5) ein Schwenksystem (6) umfassen, das ein Drehen zwischen den Waggoneinheiten (2, 3) in alle Richtungen erlaubt; und
durch mindestens eine obere Stütze (70) zwischen der gestützten Waggoneinheit (3) und der Stützwaggoneinheit (2) gestützt wird, wobei die obere Stütze (70) eine vertikale Position der gestützten Waggoneinheit (3) mit Bezug auf die Stützwaggoneinheit (2) führt,
**dadurch gekennzeichnet ist, dass** zum Ein- und Aussteigen von Passagieren an Haltestellen die obere Stütze (70) eine Neigungsvorrichtung (8) zum Versetzen mindestens einer gestützten Waggoneinheit (3) aus einem vertikalen Winkel der Stützwaggoneinheit (3) umfasst,
wobei die obere Stütze aus einer Hebelanordnung (70) besteht, die erste Hebel (71), die schwenkbar an beiden Enden des gestützten Waggons (3) im Wesentlichen in der zentralen vertikalen Längsebene (A) des Schienenfahrzeugs (1), die gleichzeitig via die Schwenksysteme (6) der unteren Stützen (5) verläuft, schwenkbar montiert sind, um sich um im Wesentlichen vertikale Achsen zu drehen und den Stützwaggons (3) zugewandt zu sein; zweite Hebel (72), die schwenkbar mit Enden der ersten Hebel (71), die zu den Stützwaggons (3) zeigen, verbunden sind und deren Stützpunkte (9) an gegenüberliegenden Enden der gestützten Waggoneinheit (3), die auf den Stützwaggoneinheiten (2) gestützt wird, auf gegenüberliegenden Seiten der vertikalen Ebene (A) positioniert sind; dritte Hebel (73), die fest in den ersten Hebeln (71) angeordnet sind, derart, dass sie zu einer Seite des Schienenfahrzeugs (1) zeigen, jeder zur selben Seite des Schienenfahrzeugs (1); und eine Verbindungsstange (74), die schwenkbar an Enden der dritten Hebel (73) montiert sind, umfasst; wobei die Neigungsvorrichtung (8) in der Verbindungsstange (74) angeordnet ist, um dieselbe zu verlängern oder zu verkürzen und so eine Neigung der gestützten Waggoneinheit (3) zu bewirken.

9. Schienenfahrzeug nach Anspruch 8, **dadurch gekennzeichnet, dass** die Neigungsvorrichtung (8) ein Hydraulikzylinder ist.

10. Schienenfahrzeug nach Anspruch 8, **dadurch gekennzeichnet, dass** die Neigungsvorrichtung (8) eine elektrische lineare Bewegungsstange ist.

11. Schienenfahrzeug nach Anspruch 8, **dadurch gekennzeichnet, dass** die Neigungsvorrichtung (8) ein Pneumatikzylinder ist.

## Revendications

1. Véhicule sur rails (1), en particulier un tram, qui comprend des unités de voiture de support (2) prévues avec des bogies (4) et au moins une unité de voiture supportée sans bogie (3) étant :
supportée entre deux unités de voiture de support (2) au moyen de supports inférieurs (5) entre les unités de voiture (2, 3), les supports inférieurs (5) comprenant un système de pivot (6) pour permettre de tourner entre les unités de voiture (2, 3) dans toutes les directions ; et étant :
supportée par au moins un support supérieur (7) entre l'unité de voiture supportée (3) et l'unité de voiture de support (2), le support supérieur (7) guidant une position verticale de l'unité de voiture supportée (3) par rapport à l'unité de voiture de support (2),
**caractérisé en ce que** pour que les passagers montent et descendent aux arrêts, le support supérieur (7) comprend un dispositif d'inclinaison (8) pour dévier au moins une unité de voiture supportée (3) d'un angle vertical de l'unité de voiture de support (2),
dans lequel le support supérieur comprend une barre de réaction (7) qui est sensiblement transversale par rapport à une direction longitudinale des voitures (2, 3) et sur laquelle le dispositif d'inclinaison (8) est agencé pour allonger ou raccourcir la barre de réaction (7) et ainsi pour provoquer l'inclinaison de l'unité de voiture supportée (3).

2. Véhicule sur rails selon la revendication 1, **caractérisé en ce qu'**alors que le véhicule sur rails (1) circule, l'utilisation des dispositifs d'inclinaison (8) est bloquée, mais aux arrêts, ils sont disponibles pour un conducteur par le biais d'un bouton poussoir prévu dans la cabine du conducteur.

3. Véhicule sur rails selon la revendication 1, **caractérisé en ce que** cette inclinaison n'est agencée que pour incliner les unités de voiture supportée (3) uniquement aux arrêts, lorsque le véhicule sur rails (1) est immobile afin que les passagers montent et descendent.

4. Véhicule sur rails selon l'une quelconque des revendications précédentes, **caractérisé en ce que** les barres de réaction (7) sont agencées aux deux extrémités de la voiture supportée (3), leurs points de support (9) sur les unités de voiture de support (2) au niveau des extrémités opposées de l'unité de voiture supportée (3) étant positionnés sur les côtés opposés d'un plan vertical longitudinal central (A) du véhicule sur rails (1) qui passe en même temps via les systèmes de pivot (6) des supports inférieurs (5).

5. Véhicule sur rails selon l'une quelconque des revendications précédentes, **caractérisé en ce que** le dispositif d'inclinaison (8) est un vérin hydraulique.

6. Véhicule sur rails selon l'une quelconque des revendications 1 à 4, **caractérisé en ce que** le dispositif d'inclinaison (8) est une barre à mouvement linéaire électrique.

7. Véhicule sur rails selon l'une quelconque des revendications 1 à 4, **caractérisé en ce que** le dispositif d'inclinaison (8) est un vérin pneumatique.

8. Véhicule sur rails (1), en particulier un tram, qui comprend des unités de voiture de support (2) prévues avec des bogies (4), et au moins une unité de voiture sans bogie supportée (3) étant :
supportée entre deux unités de voiture de support (2) au moyen de supports inférieurs (5) entre les unités de voiture (2, 3), les supports inférieurs (5) comprenant un système de pivot (6) pour permettre de tourner entre les unités de voiture (2, 3) dans toutes les directions ; et étant :
supportée par au moins un support supérieur (70) entre l'unité de voiture supportée (3) et l'unité de voiture de support (2), le support supérieur (70) guidant une position verticale de l'unité de voiture supportée (3) par rapport à l'unité de voiture de support (2),
**caractérisé en ce que** pour que les passagers montent et descendent aux arrêts, le support supérieur (70) comprend un dispositif d'inclinaison (8) pour dévier au moins une unité de voiture supportée (3) d'un angle vertical de l'unité de voiture de support (3),
dans lequel le support supérieur se compose d'un levier (70) comprenant des premiers leviers (71) montés, de manière pivotante, aux deux extrémités de la voiture supportée (3), sensiblement au niveau du plan vertical longitudinal central (A) du véhicule sur rails (1) qui passent en même temps via les systèmes de pivot (6) des supports inférieurs (5), afin de faire tourner des essieux sensiblement verticaux et orientés vers les voitures de support (3) ; des deuxièmes leviers (72) qui sont raccordés, de manière pivotante, aux extrémités des premiers leviers (71) pointant vers les voitures de support (3) et dont les points de support (9), au niveau des extrémités opposées de l'unité de voiture supportée (3) supportée sur les unités de voiture de support (2), sont positionnés sur les côtés opposés dudit plan vertical (A) ; des troisièmes leviers (73) agencés de manière fixe dans les premiers leviers (71) de sorte qu'ils pointent vers un côté du véhicule sur rails (1), chacun vers le même côté du véhicule sur rails (1) ; et une tige de raccordement (74) montée, de manière pivotante aux extrémités des troisièmes leviers (73) ; dans lequel le dispositif d'inclinaison (8) est agencé dans la tige de raccordement (74) afin de l'allonger ou le raccourcir et provoquer ainsi l'inclinaison de l'unité de voiture de support (3).

9. Véhicule sur rails selon la revendication 8, **caractérisé en ce que** le dispositif d'inclinaison (8) est un vérin hydraulique.

10. Véhicule sur rails selon la revendication 8, **caractérisé en ce que** le dispositif d'inclinaison (8) est une barre à mouvement linéaire électrique.

11. Véhicule sur rails selon la revendication 8, **caractérisé en ce que** le dispositif d'inclinaison (8) est un vérin pneumatique.
